# EUROPÄISCHE PATENTSCHRIFT

(11) **EP 3 476 517 B1**
(45) Veröffentlichungstag und Bekanntmachung des Hinweises auf die Patenterteilung: **13.01.2021**
(21) Anmeldenummer: 18201435.7
(22) Anmeldetag: 19.10.2018
(51) Int. Cl.: B23K 11/11, B23K 11/25, B23K 11/28, B23K 11/31, G01L 1/00

(54) **MESSEINRICHTUNG FÜR AUTOMATISIERTE SCHWEISSEINRICHTUNGEN, INSBESONDERE FÜR ROBOTER-SCHWEISSZANGEN, MIT EINEM ISOLATIONSGEHÄUSE**
MEASURING DEVICE FOR AUTOMATED WELDING EQUIPMENT, IN PARTICULAR FOR ROBOT WELDING TONGS, WITH AN INSULATED HOUSING
DISPOSITIF DE MESURE POUR DISPOSITIFS DE SOUDAGE AUTOMATISÉS, EN PARTICULIER POUR PINCES DE SOUDAGE ROBOTIQUES, AVEC UN BOITTIER ISOLANT

(30) Priorität: 23.10.2017 DE 102017218873
(43) Veröffentlichungstag der Anmeldung: 01.05.2019
(73) Patentinhaber: Inelta Sensorsysteme GmbH & Co. KG, 82024 Taufkirchen (DE)
(72) Erfinder: HEIMANN, Jochen, 85579 Neubiberg (DE); FIALA, Michael, 82229 Seefeld (DE)
(74) Vertreter: Hoefer & Partner Patentanwälte mbB

(56) Entgegenhaltungen:
- DE-B3-102015 214 931
- FR-A1- 2 303 287
- KR-B1- 101 569 844
- US-A- 4 588 975
- US-A- 5 535 630

## Beschreibung

Die Erfindung betrifft eine Messeinrichtung gemäß dem Oberbegriff des Anspruches 1. Eine derartige Messeinrichtung ist aus der DE 10 2015 214 931 B3 bekannt.

Schweißzangen, insbesondere zum Widerstandspunktschweißen, haben u.a. im Karosseriebau von Kraftfahrzeugen einen hohen Stellenwert, bei dem der Einsatz derartiger Schweißzangen (Roboter-Schweißzangen) einfach und flexibel ist.

Problematisch bei der Verwendung derartiger Schweißzangen ist jedoch, dass nicht rechtzeitig erkannte Fehler an den Schweißzangen oder falsche Prozessparameter beim Schweißen zu Produktionsausschuss oder fehlerhaften Teilen führen können.

Um derartige Fehler frühzeitig erkennen zu können, werden Messeinrichtungen verwendet, mit denen eine Kraftmessung des Fügevorganges durch Bestimmung der Krafteinleitung der Elektroden der Schweißzangen durchgeführt werden kann.

Aus der DE 101 27 112 A1 ist ein Schweißkopf mit einer Zustellwelle und einer über einen Zylinder beweglichen Elektrode bekannt, bei dem zur Erfassung verschiedener Parameter ein Drucksensor vorgesehen ist.

Aus der DE 102 24 402 A1 ist eine Schweißzange zum elektrischen Widerstandsschweißen mit zwei Elektroden bekannt, die einen Kraftsensor zur Erfassung eines Kraftwertes zwischen den beiden Elektroden aufweist. Durch die Anordnung dieses Sensors sollen Störkanten vermieden werden, wobei der Kraftsensor an einer der Elektrodenarmhalterungen angeordnet ist.

Aus DE 696 14 429 T2 ist ein Widerstandsschweiß-Sensoraufbau zur Überwachung von Parametern eines Widerstandsschweißverfahrens bekannt.

Aus der GB 2 134 267 A ist ein Messfühler bekannt, der eine Spule umfasst, die zwischen zwei Metallmembranteilen angeordnet und von diesen isoliert ist. Vorsprünge ragen von den

Membranteilen in entgegengesetzte Enden einer Bohrung, die sich zentral innerhalb der Spule befindet. Die gegenüberliegenden Stirnflächen der Spule sind durch Isoliermaterial getrennt, das es den Vorsprüngen ermöglicht, sich aufeinander zuzubewegen, wenn eine Last an den Membranteilen entlang der Achse der Spulenbohrung angelegt wird.

Aus der US 4 588 975 A ist ein integrierter Sensor für Kraft und Bewegung bekannt, der eine in einem Kunststoffgehäuse angeordneten Sonde aufweist.

Die KR 101 569 844 B1 beschreibt eine Ausrichtvorrichtung für eine Schweißzange.

Es ist daher Aufgabe der vorliegenden Erfindung, eine Messeinrichtung für Roboter-Schweißzangen zu schaffen, die einfach und sicher stationär betrieben werden kann.

Die Lösung dieser Aufgabe erfolgt durch die Merkmale des Anspruches 1.

Die Unteransprüche haben vorteilhafte Weiterbildungen der Erfindung zum Inhalt.

Die erfindungsgemäße Messeinrichtung weist ein Gehäuse/Elektronikgehäuse auf, das zum einen ein Halteteil zum temporären Einsetzen einer Elektrode einer Schweißzange und zum anderen eine Kraftmesszelle umfasst, an der die zweite Elektrode der Schweißzange zur Anlage gebracht werden kann, um die Krafteinleitung der Elektroden der Schweißzange ermitteln zu können.

Vorteilhafterweise kann die erfindungsgemäße Messeinrichtung während einer Inbetriebnahme der Schweißzange oder auch während eines Service-Intervalls zum Einsatz kommen. Dadurch, dass die Messeinrichtung stationär, z.B. an einer sog. Servicewand der Schweißeinrichtung, fixiert werden kann, ist es nicht nötig, dass eine Bedienperson während des eigentlichen Messvorganges, während dem die zweite Elektrode an die Kraftmesszelle angelegt wird, die Messeinrichtung von Hand halten muss, was für eine Bedienperson zum einen einfacher und zum anderen sicherer ist. Servicewände sind in der Nähe der Schweißeinrichtungen angeordnet und können z.B. weitere Komponente umfassen, wie z.B. eine Spitzeinrichtung für die Elektroden der Schweißeinrichtung, mit denen die Elektrodenköpfe, falls nötig, angespitzt werden können.

Vorteilhafterweise kann das Elektronikgehäuse der Messeinrichtung neben einem Aufnahmebereich für das Halteteil und die Kraftmesszelle ferner einen Aufnahmebereich für ein Elektronikfach umfassen, in dem eine für die Erfassung der Messwerte geeignete Elektronik-Platinenanordnung angeordnet werden kann, die über einen Kabelausgang mit einer Auswerteeinheit in Signalverbindung stehen kann.

Bei einer weiteren besonders bevorzugten Ausführungsform der erfindungsgemäßen Messeinrichtung ist die Platinenanordnung mit einer Funkübertragungseinrichtung versehen und steht mit dieser in Wirkverbindung, wobei die Funkübertragungseinrichtung sowohl eine Sende- als auch eine Empfangs-Funktion umfassen kann. Eine derartige Ausführungsform kann im Elektronikfach angeordnet sein. Insbesondere diese Art von Platinenanordnung, wie auch die Elektronik-Platinenanordnung mit Kabelausgang, kann mit einer in der Messeinrichtung integrierten autarken Stromversorgung, wie beispielsweise einer Akkumulatoranordnung oder einer Batterieanordnung, mit Energie versorgt werden.

Ferner ist es möglich, die Kraftmesszelle mit sogenannten Lastknöpfen unterschiedlicher Ausbildung zu kombinieren. Unter einem derartigen Lastknopf versteht man eine Anordnung, die aus einem Anlagestück und einem Außengewindezapfen aufgebaut ist, der in ein Innengewinde der Kraftmesszelle eingeschraubt werden kann. Hiermit ist es möglich, Anlageflächen unterschiedlicher Kontur an der Kraftmesszelle anzubringen. Derartige Anlageflächen können flach bzw. eben, konkav oder konvex ausgebildet sein, je nachdem, wie die Form der an den Lastknopf anzulegenden Elektrode ist. Derartige Anpassungen können sinnvoll sei, da sich die Elektroden von Schweißzangen während ihres Betriebs abnutzen und somit ihre Form verändern können, so dass die Anpassung der Anlagefläche der Kraftmesszelle an die entsprechende sich ergebende Form der Elektrode eine genauere Kraftmessung sicherstellt.

Der Vorteil von mit der Kraftmesszelle kombinierbaren Lastknöpfen besteht darin, dass der Aufbau der Messeinrichtung an sich nicht verändert werden muss, sondern lediglich durch Austauschen der Lastknöpfe Anpassungen auf einfache Art und Weise an eine optimale Form zur Abstützung der jeweiligen Elektrode vorgenommen werden können.

Weitere Einzelheiten, Vorteile und Merkmale der vorliegenden Erfindung ergeben sich aus nachfolgender Beschreibung eines Ausführungsbeispiels anhand der Zeichnung. Es zeigt:
- Fig. 1: eine schematisch leicht vereinfachte Draufsicht auf eine Ausführungsform einer erfindungsgemäßen Messeinrichtung,
- Fig. 2: eine Seitenansicht der Messeinrichtung gemäß Fig. 1,
- Fig. 3: eine Schnittdarstellung der Messeinrichtung gemäß Fig. 1 entlang der Linie B-B in Fig. 1, und
- Fig. 4: eine Schnittansicht der Messeinrichtung gemäß Fig. 2 entlang der Linie A-A in Fig. 2.

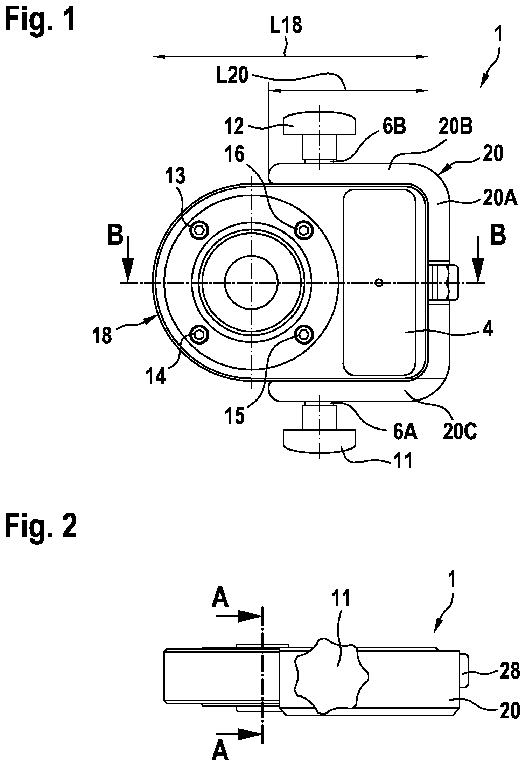

Aus einer Zusammenschau der Darstellung der Fig. 1 bis 4 ergibt sich der Aufbau und die Funktion einer erfindungsgemäßen Messeinrichtung 1 für Roboter-Schweißzangen, die in den Figuren jedoch nicht im Einzelnen dargestellt sind.

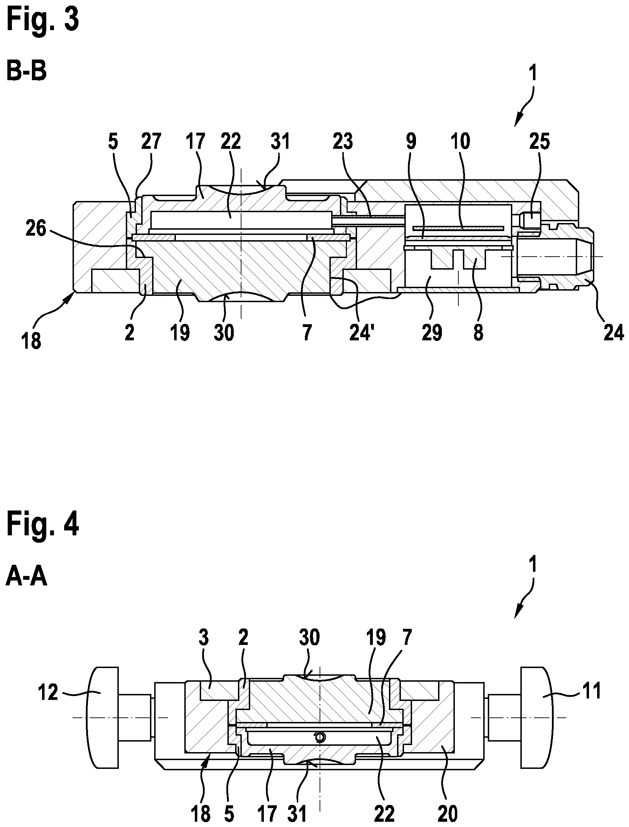

Die Messeinrichtung 1 weist ein Gehäuse/Elektronikgehäuse 18 auf. Wie vor allem die Schnittdarstellung der Fig. 3 verdeutlicht, ist in einem Bereich des Gehäuses 18 ein Halteteil 19 angeordnet, das gegenüber dem Gehäuse 18 mittels eines ersten Isolierringes 2 elektrisch isoliert ist. Der Isolierring 2 ist gestuft ausgebildet und umgibt eine entsprechend gestufte Außenkontur 24' des Halteteils 19, wie sich dies aus Fig. 3 erschließt.

Das Halteteil 19 weist eine Anlagefläche 30 auf. Die Anlagefläche 30 dient zur Anlage einer Elektrode einer Roboter-Schweißzange zum Zwecke der Durchführung einer Messung.

Gegenüber dem Halteteil 19, gemäß der in Fig. 3 gewählten Darstellung im oberen Bereich des Gehäuses 18, ist eine Kraftmesszelle 17 angeordnet. Die Kraftmesszelle 17 ist hierbei im Gehäuse 18, beispielsweise über eine Schraubverbindung oder ähnliches, fixiert und ist mittels eines umfangsseitig angeordneten zweiten Isolierrings 5 sowie einer stirnseitig angeordneten Isolierscheibe 7 gegenüber dem Gehäuse 18 elektrisch isoliert.

Wie Fig. 3 verdeutlicht, ist der zweite Isolierring 5 entsprechend einer gestuften Außenkontur 27 der Kraftmesszelle 17 ebenfalls gestuft ausgebildet und liegt umfangsseitig an der Außenkontur 27 der Kraftmesszelle 17 an, um diese umfangsseitig gegenüber dem Gehäuse 18 elektrisch zu isolieren.

Die erste Isolierscheibe 7ist zwischen der Kraftmesszelle 17 und dem Halteteil 19 eingelegt. Dadurch deckt die erste Isolierscheibe 7 einen Zellenraum 22 zumindest teilweise, vorzugsweise vollflächig, ab. Diese erste Isolierscheibe 7 ist für den Fall, dass die Kraftmesszelle 17 über eine Eigenisolation verfügt, nicht nötig.

Wie sich ferner vor allem aus Fig. 3 ergibt, ist das Halteteil 19 bei der hier dargestellten, besonders bevorzugten Ausführungsform mittels eines ringförmigen Anschraubflansches 3 mit dem Gehäuse 18 verbunden, wozu beispielsweise vier Innensechskantschrauben 13 bis 16, wie Fig. 1 zeigt, verwendet werden können.

Bei der Ausführungsform der Messeinrichtung 1 gemäß den Fig. 1 bis 4 ist die Anlagefläche 30 des Halteteils 19 und eine Anlagefläche 31 der Kraftmesszelle 1 konkav ausgebildet, also nach innen gewölbt ausgebildet.

Vom Prinzip her ist es auch möglich, die genannten Anlageflächen 30, 31 jeweils eben bzw. flach auszubilden.

Vor allem die Fig. 1 und 3 verdeutlichen ferner, dass das Gehäuse/Elektronikgehäuse 18 mit einem Elektronikfach 29 versehen ist, das benachbart zum Halteteil 19 angeordnet ist. Im Elektronikfach 29 ist eine Platinenanordnung, im Beispielsfalle bestehend aus den Platinen 8, 9 und 10, angeordnet, die mit der Kraftmesszelle 17 in Signalverbindung stehen können und die über einen Kabelausgang 24 mit einer Auswerteeinheit signalverbunden werden können.

Das Elektronikfach 29 kann mittels eines Deckels 4, der vorzugsweise lösbar ist, verschlossen werden.

Wie sich aus einer Zusammenschau der Fig. 1 und 2 ergibt, ist das Gehäuse 18 im Bereich des Elektronikfachs 29 von einem Isolationsgehäuse 20 umgeben, das beispielsweise mittels einer Schraubverbindung, z.B. in Form von Handhaben bzw. Sterngriffen 11, 12, am Gehäuse 18 fixiert werden kann.

Die Draufsicht der Fig. 1 verdeutlicht hierbei, dass das Isolationsgehäuse 20, in Draufsicht gesehen, gemäß der Erfindung U-förmig ausgebildet ist. Es überdeckt das Gehäuse 18 ausgehend von der Seite des Elektronikfachs 29 über eine Länge L20, wobei das Gehäuse 18 eine Länge L18 aufweist. Das Verhältnis L18 : L20 kann in einem Bereich von 1,5 bis 1,8, vorzugsweise bei einem Wert von 1,7, liegen.

Wie Fig. 1 verdeutlicht, durchgreift der Kabelausgang 29 einen Verbindungsschenkel 20a des Isolationsgehäuses 20, der Seitenschenkel 20b und 20c miteinander verbindet.

Die Darstellung der Fig. 2 verdeutlicht ferner, dass das Isolationsgehäuse 20 im Überdeckungsbereich eine Breite aufweist, die der Breite des Gehäuses 18 bzw. des Elektronikfachs 29 entspricht. Am Isolationsgehäuse 20 kann eine aus Fig. 2 ersichtliche Verschraubung, beispielsweise in Form einer PG-Verschraubung 28, vorgesehen sein, mittels der das Isolationsgehäuse 20 an einer stationären Haltestelle, wie der eingangs erläuterten Servicewand, fixiert werden kann.

Um einen Messvorgang mit der erfindungsgemäßen Messeinrichtung 1 durchführen zu können, wird diese zunächst z.B. an einem einer Schweißeinrichtung zugeordneten Servicetisch befestigt, wobei die Zuordnung ermöglicht, dass die Schweißeinrichtung mit den Elektroden in den Bereich des Servicetisches bewegt werden kann. Zur Messung des Krafteintrages der beiden Elektroden werden diese in die Anlageflächen 30 und 31 des Halteteils 19 bzw. der Kraftmesszelle 17 eingesetzt, wonach der Krafteintrag der beiden Elektroden aufgenommen werden kann, der dann beispielsweise zum Zwecke der Überwachung oder zum Zwecke einer Justierung oder zum Zwecke einer Fehlerbehebung bzw. Fehlererkennung verwendet werden kann.

### Bezugszeichenliste

- 1: Messeinrichtung
- 2: Isolierring
- 3: Anschraubflansch
- 4: Deckel
- 5: Isolierring
- 6A, 6B: Beilagscheiben
- 7: Isolierscheibe
- 8-10: Platinen/Elektronik
- 11, 12: Handhabe/Sterngriff
- 13-16: Innensechskantschraube
- 17: Kraftmesszelle
- 18: Gehäuse/Elektronikgehäuse
- 19: Halteteil
- 20: Isolationsgehäuse
- 21: Isolierscheibe
- 22: Zellenraum
- 23: Rohr
- 24: Kabelausgang
- 25: Gewindestift
- 26: Unterlegring
- 27: Außenkontur
- 28: PG-Verschraubung
- 29: Elektronikfach
- 30, 31: Anlagefläche

## Patentansprüche

1. Messeinrichtung (1) für automatisierte Schweißeinrichtungen, insbesondere für Roboter-Schweißzangen
- mit einem Gehäuse (18);
- mit einem Halteteil (19),
• das im Gehäuse (18) fixiert und gegenüber dem Gehäuse (18) mittels eines ersten Isolierrings (2) isoliert ist, und
- mit einer Kraftmesszelle (17),
• die im Gehäuse (18) fixiert ist, und
• die mittels eines umfangsseitigen zweiten Isolierrings (5) und einer stirnseitigen Isolierscheibe (7) gegenüber dem Gehäuse (18) isoliert ist,
**gekennzeichnet durch**
- ein, in Draufsicht gesehen, U-formig ausgebildetes Isolationsgehäuse (20), das das Gehäuse (18) teilweise umgreift und eine Fixiereinrichtung (28) zur Anbringung an einem stationären Halteteil aufweist.

2. Messeinrichtung nach Anspruch 1, **dadurch gekennzeichnet, dass** der erste Isolierring (2) entsprechend einer gestuften Außenkontur des Halteteils (19) gestuft ausgebildet ist.

3. Messeinrichtung nach einem der Ansprüche 1 oder 2, **dadurch gekennzeichnet, dass** das Halteteil (19) mittels einer Flanschanordnung (3) am Gehäuse (18) fixiert ist.

4. Messeinrichtung nach einem der Ansprüche 1 bis 3, **dadurch gekennzeichnet, dass** der zweite Isolierring (5) entsprechend einer gestuften Außenkontur (27) der Kraftmesszelle (17) gestuft ausgebildet ist.

5. Messeinrichtung nach einem der Ansprüche 1 bis 4, **dadurch gekennzeichnet, dass** das Gehäuse (18) ein Elektronikfach (29), benachbart zum Halteteil (19) aufweist.

6. Messeinrichtung nach Anspruch 5, **dadurch gekennzeichnet, dass** das Elektronikfach (29) eine Platinenanordnung (8, 9, 10) aufweist.

7. Messeinrichtung nach Anspruch 5, **dadurch gekennzeichnet, dass** das Elektronikfach (29) mit einem Kabelausgang (24) versehen ist.

8. Messeinrichtung nach einem der Ansprüche 5 bis 7, **dadurch gekennzeichnet, dass** das Elektronikfach (29) mittels eines lösbaren Deckels (4) verschlossen ist.

9. Messeinrichtung nach einem der Ansprüche 1 bis 8, **dadurch gekennzeichnet, dass** die Kraftmesszelle (17) mit der Platinenanordnung (8, 9, 10) in Signalverbindung steht.

10. Messeinrichtung nach einem der Ansprüche 1 bis 9, **dadurch gekennzeichnet, dass** die Platinenanordnung (8, 9, 10) mit einer Funkübertragungseinrichtung in Wirkverbindung steht.

11. Messeinrichtung nach einem der Ansprüche 1 bis 10, **dadurch gekennzeichnet, dass** eine integrierte autarke Stromversorgung für die Platinenanordnung (8, 9, 10) im Gehäuse (18) vorgesehen ist.

12. Messeinrichtung nach einem der Ansprüche 1 bis 11, **gekennzeichnet durch** an den Anwendungsfall angepasste Anlageflächen der Kraftmesszelle (17), die eben, konkav oder konvex ausbildbar sind.

## Claims

1. Measuring device (1) for automated welding equipment, in particular for robot welding tongs,
- with a housing (18);
- with a holding part (19)
• fixed in the housing (18) and insulated from the housing (18) by means of a first insulating ring (2), and
- with a load cell (17)
• fixed in the housing (18), and
• insulated from the housing (18) by means of a circumferential second insulating ring (5) and front-end insulating washer (7),
**characterised by**
- a U-shaped, in plan view, insulated housing (20), partially encompassing the housing (18) and having a fixing device (28) for attachment to a stationary holding part.

2. Measuring device according to claim 1, **characterised in that** the first insulating ring (2) is formed in a stepped fashion corresponding to a stepped outer contour of the holding part (19).

3. Measuring device according to any one of claims 1 or 2, **characterised in that** the holding part (19) is fixed to the housing (18) by means of a flange arrangement (3).

4. Measuring device according to any one of claims 1 to 3, **characterised in that** the second insulating ring (5) is formed in a stepped fashion corresponding to a stepped outer contour (27) of the load cell (17).

5. Measuring device according to any one of claims 1 to 4, **characterised in that** the housing (18) has an electronics compartment (29) adjacent to the holding part (19).

6. Measuring device according to claim 5, **characterised in that** the electronics compartment (29) has a circuit board arrangement (8, 9, 10).

7. Measuring device according to claim 5, **characterised in that** the electronics compartment (29) is provided with a cable outlet (24).

8. Measuring device according to any one of claims 5 to 7, **characterised in that** the electronics compartment (29) is closed by means of a detachable lid (4).

9. Measuring device according to any one of claims 1 to 8, **characterised in that** the load cell (17) is in signal connection with the circuit board arrangement (8, 9, 10).

10. Measuring device according to any one of claims 1 to 9, **characterised in that** the circuit board arrangement (8, 9, 10) is operatively connected with a radio transmission device.

11. Measuring device according to any one of claims 1 to 10, **characterised in that** an integrated independent power supply for the circuit board arrangement (8, 9, 10) is provided in the housing (18).

12. Measuring device according to any one of claims 1 to 11, **characterised by** contact surfaces of the load cell (17) adapted to the individual application, which can be formed in a flat, concave or convex fashion.

## Revendications

1. Dispositif de mesure (1) pour des dispositifs de soudage automatisés, en particulier pour des pinces de soudage robotisées,
- avec un boîtier (18) ;
- avec une partie de maintien (19),
• qui est fixée dans le boîtier (18) et est isolée par rapport au boîtier (18) au moyen d'une première bague d'isolation (2), et
- avec une cellule de mesure de force (17),
• qui est fixée dans le boîtier (18), et
• qui est isolée par rapport au boîtier (18) au moyen d'une deuxième bague d'isolation (5) côté périphérique et d'un disque d'isolation (7) côté frontal,
**caractérisé par**
- un boîtier d'isolation (20), en vue de dessus, réalisé en forme de U, qui entoure en partie le boîtier (18) et présente un dispositif de fixation (28) destiné à être installé au niveau d'une partie de maintien stationnaire.

2. Dispositif de mesure selon la revendication 1, **caractérisé en ce que** la première bague d'isolation (2) est réalisée de manière étagée de manière à correspondre à un contour extérieur étagé de la partie de maintien (19).

3. Dispositif de mesure selon l'une quelconque des revendications 1 ou 2, **caractérisé en ce que** la partie de maintien (19) est fixée au niveau du boîtier (18) au moyen d'un ensemble de brides (3).

4. Dispositif de mesure selon l'une quelconque des revendications 1 à 3, **caractérisé en ce que** la deuxième bague d'isolation (5) est réalisée de manière étagée de manière à correspondre à un contour extérieur (27) étagé de la cellule de mesure de force (17).

5. Dispositif de mesure selon l'une quelconque des revendications 1 à 4, **caractérisé en ce que** le boîtier (18) présente un compartiment électronique (29), de manière adjacente par rapport à la partie de maintien (19).

6. Dispositif de mesure selon la revendication 5, **caractérisé en ce que** le compartiment électronique (29) présente un ensemble de platines (8, 9, 10).

7. Dispositif de mesure selon la revendication 5, **caractérisé en ce que** le compartiment électronique (29) est pourvu d'une sortie de câble (24).

8. Dispositif de mesure selon l'une quelconque des revendications 5 à 7, **caractérisé en ce que** le compartiment électronique (29) est fermé au moyen d'un couvercle (4) amovible.

9. Dispositif de mesure selon l'une quelconque des revendications 1 à 8, **caractérisé en ce que** la cellule de mesure de force (17) est en liaison de signaux avec l'ensemble de platines (8, 9, 10).

10. Dispositif de mesure selon l'une quelconque des revendications 1 à 9, **caractérisé en ce que** l'ensemble de platines (8, 9, 10) coopère avec un dispositif de transmission par radio.

11. Dispositif de mesure selon l'une quelconque des revendications 1 à 10, **caractérisé en ce qu'**une alimentation en courant autonome intégrée est prévue pour l'ensemble de platines (8, 9, 10) dans le boîtier (18).

12. Dispositif de mesure selon l'une quelconque des revendications 1 à 11, **caractérisé par** des surfaces d'appui, adaptées au cas d'application, de la cellule de force de mesure (17), qui peuvent être réalisées de manière plane, concave ou convexe.
